# EUROPÄISCHE PATENTANMELDUNG

(11) **EP 1 592 106 A1**
(43) Veröffentlichungstag der Anmeldung: **02.11.2005**
(21) Anmeldenummer: 04405268.6
(22) Anmeldetag: 29.04.2004
(51) Int. Cl.: H02J 9/00, H02J 3/00

(54) **Vorrichtung zum Anschliessen einer elektrischen Last an eine Energiequelle**

(71) Anmelder: Human Bios GmbH, 8280 Kreuzlingen (CH)
(72) Erfinder: Beck, Carl, 52072 Aachen (DE); Kisters, Friedrich, 8280 Kreuzlingen (DE)
(74) Vertreter: Roshardt, Werner Alfred

(57) **Zusammenfassung**

Mit einer erfindungsgemässen Vorrichtung (1) wird eine elektrische Last (8) an zwei Energiequellen (5, 6) angeschlossen. Die Vorrichtung (1) umfasst ein Relais (10), welches als Umschalter (14) ausgebildet ist und jeweils genau einen der Eingänge (2, 3) der Vorrichtung (1) auf deren Ausgang (4) durchschaltet. Zur Steuerung, welcher der beiden Eingänge (2, 3) auf den Ausgang (4) der Vorrichtung (1) durchgeschaltet wird, ist der Eingang (11) des Relais (10) und damit der Eingang (2) der Vorrichtung (1) direkt mit dem Steuereingang (16) verbunden. Das Relais (10) ist derart ausgebildet, dass sein Eingang (11) auf seinen Ausgang (13) durchgeschaltet wird, wenn an diesem Eingang (11) ein korrektes Versorgungssignal anliegt. In diesem Fall wird die Last (8) von der an diesem Eingang (11) angeschlossenen Energiequelle (5) gespeist. Liefert diese Energiequelle (5) kein korrektes Versorgungssignal, wird der Eingang (12) des Relais (10) auf den Ausgang (13) durchgeschaltet und die Last (8) wird von der anderen Energiequelle (6) gespeist.

## Beschreibung

### Technisches Gebiet

Die Erfindung betrifft eine Vorrichtung mit einem Geräteanschluss zum Anschliessen einer elektrischen Last sowie mit zwei Netzanschlüssen zum Anschliessen an zumindest eine Energieversorgung. Die Erfindung betrifft weiter eine entsprechende Anschlussanordnung.

### Stand der Technik

In vielen Bereichen wird eine sichere Versorgung mit elektrischer Energie immer wichtiger. Dies kann sowohl einzelne Module oder Geräte als auch ganze Systeme oder gar Gebäude betreffen. Fällt während der Benutzung eines Gerätes, beispielsweise während der Arbeit mit einem Computer, dessen Stromversorgung aus, kann es zu einem Informationsverlust kommen. Zudem ist das Gerät während dem Stromausfall nicht benutzbar. Es kann sogar sein, dass das Gerät selber Schaden nimmt und nicht mehr weiter verwendet werden kann. Solche Störungen können einen beträchtlichen finanziellen Schaden anrichten. Dies gilt in verstärktem Masse bei grösseren Systemen wie beispielsweise einem Rechenzentrum einer Firma. Noch verheerender können die Folgen sein, wenn die Stromversorgung ganzer Gebäude, wie beispielsweise eines Hospitals oder ganzer Gebiete, infolge einer Störung in einem Kraftwerk oder dem nachfolgenden Verteilnetz ausfällt.

Je nach der beigemessenen Wichtigkeit gibt es verschiedene Möglichkeiten, um den Folgen solcher Störungen in den Stromverteilnetzen vorzubeugen. Bei grösseren Gebieten stützt man sich auf eine engmaschige Vernetzung verschiedener Stromerzeuger. Bei Gebäuden oder Systemen, wo eine Energieversorgung unbedingt aufrecht erhalten werden muss, wie beispielsweise in einem Hospital oder in einem Rechenzentrum einer Grossbank, werden typischerweise zusätzliche, von der Netzversorgung unabhängige Energiequellen eingesetzt, welche bei einem Ausfall der Netzversorgung einspringen und die benötigte Energie liefern.

Bei kleineren Systemen oder einzelnen Geräten ist es auch bekannt, Batterien vorzusehen, die bei einem Ausfall der Netzversorgung die Versorgung der angeschlossenen elektrischen Verbraucher übernehmen. Solche Systeme benötigen allerdings zusätzlich Platz und sind im Vergleich zu den abgesicherten Geräten in der Regel relativ teuer. Zudem ist die Dauer der Überbrückung typischerweise auf eine kurze Zeitspanne beschränkt. Derartige batteriegestützte Systeme werden beispielsweise häufig bei Computern eingesetzt, wo diese Zeitspanne meist auf wenige Minuten begrenzt ist. Dies stellt zumindest sicher, dass der Computer bei einem Stromausfall definiert abgeschaltet, d.h. herunter gefahren werden kann, damit möglichst keine Datenverluste oder Beschädigungen des Computers auftreten.

Aus der US 6,330,176 B1 ist ein weiteres System zur unterbruchsfreien Speisung einer Last beschrieben. Mittels zweier Schalter, beispielsweise Relais, wird jeweils eine von zwei unabhängigen Stromversorgungen an die Last angeschaltet, wobei jeder Schalter von einer eigenen Steuerschaltung angesteuert wird. Um zu verhindern, dass die Last gleichzeitig an beide Stromversorgungen angeschaltet wird, empfängt jede Steuerschaltung jeweils ein Sperrsignal der anderen.

Dieses System ist aufwändig und kompliziert. Es erfordert einen hohen schaltungstechnischen Aufwand und ist entsprechend teuer. Zudem besteht bei einem Defekt eines Bauteils die Gefahr, dass die angeschlossene Last beschädigt wird. Fällt nämlich beispielsweise ein Sperrsignal aus, kann es sein, dass die Last gleichzeitig an beide Stromversorgungen angeschaltet wird.

### Darstellung der Erfindung

Aufgabe der Erfindung ist es, eine dem eingangs genannten technischen Gebiet zugehörende Vorrichtung zu schaffen, welche es erlaubt, die Nachteile der aus dem Stand der Technik bekannten Vorrichtungen und Systeme zu vermeiden und insbesondere eine einfache und kostengünstige Möglichkeit schafft, eine elektrische Last, beispielsweise ein elektrisch betriebenes Gerät, redundant mit elektrischer Energie zu versorgen.

Die Lösung der Aufgabe ist durch die Merkmale des Anspruchs 1 definiert. Wie bereits erwähnt, betrifft die Erfindung eine Vorrichtung mit einem Geräteanschluss und zwei Netzanschlüssen. Gemäss der Erfindung umfasst die Vorrichtung weiter ein Relais mit zwei Eingängen und einem Ausgang, wobei die beiden Eingänge des Relais mit den beiden Netzanschlüssen der Vorrichtung und der Ausgang des Relais mit dem Geräteanschluss der Vorrichtung elektrisch verbunden sind. Das Relais umfasst weiter einen Steueranschluss zur Steuerung der Durchschaltung, d.h. zur Steuerung, welcher der beiden Eingänge des Relais auf dessen Ausgang und damit welcher der beiden Netzanschlüsse auf den Geräteanschluss durchgeschaltet wird. Die Steuerung des Relais ist nun derart realisiert, dass der Steueranschluss direkt mit einem der Eingänge des Relais verbunden ist.

Zur Realisierung der Erfindung können sowohl elektromechanische/elektromagnetische Relais als auch Halbleiterrelais verwendet werden. Während das Umschalten bei elektromechanischen/elektromagnetischen Relais in bekannter Weise mechanisch erfolgt, geschieht dies bei Halbleiterbauelementen elektronisch.

Ausser einem einfachen Relais, das als Umschalter verwendet wird, und einigen elektrischen Verbindungen sind keine weiteren elektrischen Bauteile notwendig. Die Vorrichtung ist damit einfach und kostengünstig herzustellen. Eine aufwändige Steuerschaltung entfällt, da zur Steuerung des Relais direkt das Eingangssignal an einem der beiden Eingänge des Relais verwendet wird. D.h. zur Steuerung, welcher der beiden Eingänge des Relais auf dessen Ausgang und damit welcher der beiden Netzanschlüsse der Vorrichtung auf deren Geräteanschluss durchgeschaltet wird, wird direkt das Versorgungssignal an einem der beiden Netzanschlüsse verwendet.

Wird nun die Vorrichtung mit ihren Netzanschlüssen an zwei unabhängige Energiequellen und ein elektrisch betriebenes Gerät an den Geräteanschluss der Vorrichtung angeschlossen, und vorausgesetzt, es fallen nicht beide Energiequellen gleichzeitig aus, ist gewährleistet, dass das Gerät redundant, d.h. im Wesentlichen unterbruchsfrei mit elektrischer Energie betrieben werden kann. Der Begriff elektrisch betriebenes Gerät darf in diesem Zusammenhang jedoch nicht eng ausgelegt werden. Dieser Begriff soll auch einfache elektrische Verbraucher, wie beispielsweise eine Glühbirne oder ganze Systeme wie beispielsweise ein Computer samt Bildschirm und weiteren Peripheriegeräten umfassen.

Das Relais ist vorzugsweise als Umschalter ausgebildet, d.h. es schaltet zwingend einen der beiden Eingänge, aber nicht beide gleichzeitig auf den Ausgang durch. Es ist derart ausgebildet und verdrahtet, dass es in seiner Ruhestellung denjenigen Eingang auf seinen Ausgang durchschaltet, welcher nicht direkt mit dem Steueranschluss verbunden ist. Dadurch ist - vorausgesetzt, die Vorrichtung ist mittels der beiden Netzanschlüsse an zwei unabhängige Stromversorgungsnetze angeschlossen und es fallen nicht gleichzeitig beide Stromversorgungsnetze aus - in jedem Fall sicher gestellt, dass ein am Geräteanschluss angeschlossenes Gerät jederzeit mit Strom versorgt wird.

Um ein Beispiel zu geben, sei der erste Netzanschluss mit dem ersten Eingang des Relais und dieser direkt mit dem Steueranschluss verbunden. Weist nun das Stromversorgungsnetz, an welches der erste Netzanschluss angeschlossen ist, eine Störung auf, liegt am Steueranschluss keine oder eine zu kleine Spannung an und es fliesst folglich kein oder nur ein kleiner Strom. Der dadurch beispielsweise in der Magnetisierungswicklung eines elektromechanischen Relais erzeugte magnetische Fluss reicht in diesem Fall nicht aus, um das Relais anziehen zu lassen. Das Relais bleibt folglich in seiner Ruhestellung und schaltet somit den zweiten Eingang des Relais auf dessen Ausgang, d.h. den zweiten Netzanschluss auf den Geräteanschluss durch. Fällt nun die Störung des ersten Stromversorgungsnetzes weg, liegt am Steueranschluss eine ausreichende Spannung an und es fliesst folglich ein ausreichender Strom, so dass das Relais anzieht. Unabhängig davon, ob am zweiten Netzanschluss eine korrekte Netzspannung anliegt oder nicht, schaltet das Relais also den ersten Netzanschluss auf den Geräteanschluss durch, sobald am ersten Netzanschluss eine korrekte Netzspannung anliegt.

Mit anderen Worten: die entscheidende Grösse für die Güte bzw. Qualität der Netzspannung ist quasi der Schaltkorridor des verwendeten Relais. Das bedeutet, dass die Anforderungen an die Qualität der Netzspannung, d.h. die Bedingungen, unter welchen das Relais in der Ruhestellung verbleibt oder anzieht, sehr genau durch die konkrete Wahl des Relais festgelegt werden können. Durch die konkrete Wahl eines Relais kann insbesondere festgelegt werden, welche Spannungsamplituden zur Aktivierung des Relais ausreichend sind und welche Ausfallzeiten der Netzspannung erlaubt sind, damit das Relais aufgrund seiner Trägkeit gerade noch nicht umschaltet.

Würde das Relais so ausgebildet und/oder verdrahtet, dass es in seiner Ruhestellung den mit dem Steueranschluss verbundenen Eingang auf den Ausgang durchschaltet, würde das Relais bei seiner Aktivierung durch ein am ersten Eingang anliegendes Versorgungssignal automatisch den zweiten Eingang durchschalten, egal, ob an diesem ein korrektes Versorgungssignal anliegt oder nicht. In diesem Fall wäre eine redundante Stromversorgung also nicht gewährleistet. D.h. das Relais ist so ausgebildet und/oder verdrahtet, dass der mit dem Steueranschluss verbundene Eingang priorisiert, d.h. bei ausreichender Qualität der entsprechenden Netzspannung auf den Ausgang durchgeschaltet ist. Fällt die entsprechende Energieversorgung aus, fällt das Relais in seine Ruhestellung zurück und schaltet den anderen Eingang auf den Ausgang durch.

Würde andererseits nicht ein Umschaltrelais, sondern beispielsweise ein Relais verwendet, welches in seiner Ruhestellung keine Verbindung zwischen einem seiner Eingänge auf dem Ausgang herstellt, wäre ebenfalls nicht sichergestellt, dass jederzeit genau Eingang auf den Ausgang durchgeschaltet ist.

Der weiter oben verwendete Begriff "zwei unabhängige Stromversorgungsnetze" darf im Zusammenhang mit der vorliegenden Erfindung nicht eng ausgelegt werden. Darunter können beispielsweise auch zwei verschiedene Abschnitte ein- und desselben Stromversorgungsnetzes verstanden werden. Beispielsweise zwei verschiedene Phasen eines mehrphasigen Stromversorgungsnetzes, wo beispielsweise der erste Netzanschluss des Gerätes zwischen der ersten Phase und dem Neutral- bzw. Nullleiter und der zweite Netzanschluss zwischen der zweiten Phase und dem Neutral- bzw. Nullleiter angeschlossen wird. Fällt nun eine der beiden Phasen - aus welchen Gründen auch immer - aus, beispielsweise weil eine entsprechende Sicherung durchgebrannt ist, kann das Gerät folglich über die andere Phase korrekt weiter betrieben werden.

Bei den zwei verschiedenen Abschnitten kann es sich auch um verschiedene Abgänge von einem Hausanschluss handeln, welche in der Regel ebenfalls separat abgesichert sind. Derartige Abgänge werden beispielsweise in Mietshäusern benutzt, um den Strom in die verschiedenen Wohnungen zu verteilen. Sie können aber natürlich auch verwendet werden, um in einer Wohnung bzw. einem Gebäude eine redundante Netzversorgung zu erreichen. Schliesslich fallen unter diesen Begriff auch Systeme, welche tatsächlich zwei unabhängige Energiequellen umfassen. Beispielsweise zwei unabhängige Stromgeneratoren, das Niederspannungsstromversorgungsnetz eines Netzanbieters und einen Stromgenerator, ein Batteriesystem oder beliebige andere Energiequellen und beliebige Kombinationen davon.

Unter einer Störung solcher Energiequellen soll nicht nur ein Totalausfall verstanden werden. Derartige Störungen können beispielsweise auch einen kurzen oder längeren Einbruch der Spannung oder des Stroms beinhalten, so dass das Relais aufgrund seiner elektrischen und/oder mechanischen Eigenschaften in seinen Ruhezustand zurückkehrt.

Wie bereits erwähnt, sind viele verschiedene Energiequellen zur Lieferung der elektrischen Energie für den Betrieb des elektrischen Gerätes möglich. Bei einer vorteilhaften Ausführungsform der Erfindung umfasst die zumindest eine Energieversorgung jedoch ein Niederspannungsstromversorgungsnetz. Derartige Stromnetze sind nämlich in praktisch allen Gebäuden und in jedem Raum eines Gebäudes standardmässig vorhanden. Es muss folglich kein grosser Aufwand betrieben werden, um zusätzliche Energiequellen wie etwa Batterien oder Generatoren zu installieren und zu warten.

Bei einem bevorzugten Ausführungsbeispiel der Erfindung umfasst die Vorrichtung nicht nur einen, sondern mehrere Geräteanschlüsse, wobei der Ausgang des Relais mit jedem Geräteanschluss elektrisch verbunden ist. D.h. es können gleichzeitig mehrere elektrische Geräte an die Vorrichtung angeschlossen und redundant mit elektrischer Energie versorgt werden.

Bei einer weiteren bevorzugten Ausführungsvariante der erfindungsgemässen Vorrichtung weist diese mehr als zwei, d.h. zumindest drei Netzanschlüsse auf. Damit kann die Vorrichtung an drei unabhängige Energiequellen angeschlossen werden und die Wahrscheinlichkeit, dass ein an die Vorrichtung angeschlossenes Gerät nicht mit elektrischer Energie versorgt wird, kann dadurch weiter verkleinert werden. Konkret umfasst eine derartige Vorrichtung weiter zumindest zwei Relais, wobei jeder Netzanschluss der Vorrichtung mit einem Eingang eines Relais, der Ausgang genau eines Relais mit dem Geräteanschluss und der Ausgang der anderen Relais mit einem Eingang eines anderen Relais verbunden ist. Als Beispiel sei eine Vorrichtung mit drei Netzanschlüssen und zwei Relais kurz beschrieben. Die ersten beiden Netzanschlüsse sind mit den Eingängen des ersten Relais verbunden. Der dritte Netzanschluss und der Ausgang des ersten Relais wiederum sind mit den Eingängen des zweiten Relais verbunden. Der Ausgang des zweiten Relais ist schliesslich mit dem bzw. den Geräteanschlüssen verbunden.

Ein typischer Einsatzbereich der vorliegenden Erfindung ist eine redundante Stromversorgung von elektrischen Geräten, wie beispielsweise Computern oder elektrischen Massenspeichern. Die Netz- bzw. Geräteanschlüsse sind daher typischerweise derart ausgebildet, dass die Vorrichtung an die an einem bestimmten Ort üblichen und gängigen Stromversorgungsnetze angeschlossen werden können. Um dem Benutzer beim Umgang mit solchen Vorrichtungen eine möglichst grosse Sicherheit zu bieten, weisen die Netzanschlüsse mit Vorteil männliche Verbindungskontakte auf. Die Netzanschlüsse sind insbesondere als Stecker am Ende eines Kabels zum Einstecken in eine handelsübliche Netzsteckdose oder als Gerätestecker zur Integration in ein Gehäuse ausgebildet. Der bzw. die Geräteanschlüsse wiederum weisen mit Vorteil weibliche Verbindungskontakte auf. Sie sind insbesondere als Wandsteckdosen, Gerätesteckdosen oder als Steckdose am Ende eines Kabels zum Einstecken handelsüblicher Netzkabel ausgebildet.

Wahlweise können die Netzanschlüsse und/oder der bzw. die Geräteanschlüsse auch als Kabel realisiert sein. D.h. ein Ende eines solchen Kabels ist als Netz- bzw. Geräteanschluss ausgebildet und das andere Ende ist entsprechend mit dem Relais verbunden.

Aber nicht nur die einzelnen Anschlüsse können als Kabel realisiert sein, auch die gesamte Vorrichtung kann als Kabel ausgebildet sein. D.h. die Vorrichtung bildet eine Art Y-förmiges Kabel, wobei die beiden parallelen Enden die Netzanschlüsse und das einzelne Ende den Geräteanschluss bilden. Das Relais befindet sich in diesem Beispiel am Kreuzungspunkt der drei Kabelabschnitte und ist in die Kabelhülle integriert, beispielsweise eingeschweisst.

Bei einer anderen bevorzugten Ausführungsform ist die Vorrichtung nicht als Kabel, sondern als eigenständiges Gehäuse ausgebildet. In diesem Fall sind die Netzanschlüsse als Gerätestecker und der Geräteanschluss als Gerätesteckdose ausgebildet. Sowohl Stecker als auch Steckdosen sind hierbei in das Gehäuse integriert und derart angeordnet, dass entsprechende Kabel daran angeschlossen werden können. Diese Ausbildungsform erlaubt es, dass die Vorrichtung für den Anschluss verschiedenster Geräte verwendet werden kann, wobei sie auch problemlos von einem zum anderen Gerät verschoben werden kann. Sie ist folglich überaus flexibel einsetz- und verwendbar.

Bei einer weiteren bevorzugten Ausführungsform der Erfindung ist die Vorrichtung direkt in die Elektroinstallation eines Gebäudes integriert, z. B. durch Einbau in den Sicherungskasten oder einen Schaltschrank. D. h. die Netzanschlüsse der Vorrichtung sind in diesem Falle direkt mit entsprechenden Energiequellen verbunden und der Geräteanschluss ist als Steckdose, insbesondere als Wandsteckdose, ausgebildet. Indem ein Gerät an eine solche Steckdose angeschlossen wird, kann es für den Benutzer quasi unsichtbar redundant mit elektrischer Energie versorgt werden.

Ist ein Gerät an eine erste Energiequelle angeschlossen und fällt diese aus, schaltet das Relais, wie bereits erwähnt, auf die zweite Energiequelle um. Solche Umschaltvorgänge können nicht unendlich schnell geschehen. Die Verzögerung beim Umschalten hängt in erster Linie von der Schaltverzögerung des verwendeten Relais ab. Damit das Umschalten für das angeschlossene Gerät ohne Folgen bleibt, d.h. damit das angeschlossene Gerät quasi nichts von der Umschaltung bemerkt, sollte der Umschaltvorgang möglichst kurz sein. Es werden daher vorzugsweise Relais verwendet, welche eine Schaltverzögerung aufweisen, die unter einigen Dutzend Millisekunden liegt. Es werden insbesondere Relais bevorzugt, deren Schaltverzögerung unter 15 Millisekunden liegt.

Bei Verwendung derartiger Relais ist insbesondere bei Elektrogeräten, bei welchen die zugeführte Energie gepuffert wird, kaum etwas von dem kurzen Unterbruch beim Umschalten von einer auf die andere Energieversorgung wahrzunehmen. Elektrische Verbraucher ohne Pufferung, wie beispielsweise Glühbirnen, flackern beim Umschalten kurz.

Durch die Verwendung von Relais mit kurzen Umschaltverzögerungen können die Probleme, die beim Umschalten auftreten können, weiter verringert werden.

Bei weiteren vorteilhaften Ausführungsbeispielen der Erfindung kann die Vorrichtung weitere Merkmale aufweisen. Diese umfassen beispielsweise Mittel zum Schutz der Vorrichtung und der daran angeschlossenen Geräte vor Überspannungen als Folge von Schaltphänomenen, auftretenden Spannungsschwankungen oder Blitzschlägen. Mit Schaltphänomenen werden hierbei insbesondere Spannungserhöhungen bezeichnet, welche in Abhängigkeit der geschalteten Last beim Ein- bzw. Ausschalten eines elektrischen Gerätes auftreten können. Die Vorrichtung kann hierfür einen Überspannungsschutz, wie beispielsweise Varistoren, an den Netzanschlüssen aufweisen. Um Spannungsspitzen der Eingangssignale, d.h. der Netzspannung an den Netzanschlüssen zu dämpfen, kann die Vorrichtung auch Netzfilter an den Netzanschlüssen aufweisen. Diese Mittel dienen auch zum Schutz der Vorrichtung beim Umschalten induktiver Lasten, wie beispielsweise Elektromotoren aber auch gewisse Arten von Schaltnetzteilen.

Weiter kann die Vorrichtung auch eine Anzeige zum Anzeigen des Betriebszustandes der Vorrichtung umfassen. Es könnte beispielsweise angezeigt werden, welcher der Netzanschlüsse auf den Geräteanschluss durchgeschaltet ist oder ob an den Eingängen der Vorrichtung korrekte Eingangssignale anliegen.

Um zu verhindern, dass bei einem Phasenkurzschluss, beispielsweise nach einem Feder- oder Kontaktbruch innerhalb des Relais, auf einem der Netzanschlüsse der Vorrichtung die Netzspannung anliegt, können Relais mit zwangsgeführten Kontakten und/oder getrennten Schaltkammern verwendet werden. Allgemein sollten Relais mit ausreichender Qualität verwendet werden.

Bei einer anderen bevorzugten Ausführungsform der Erfindung bilden mehrere der vorgängig beschriebenen Vorrichtungen eine Einheit, einen nachfolgend als Anschlussanordnung bezeichneten Gegenstand. D.h. eine Anschlussanordnung gemäss der Erfindung umfasst zumindest zwei Vorrichtungen wie sie vorgängig beschrieben sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer erfindungsgemässen Vorrichtung, welche an zwei Energiequellen und an welche eine Last angeschlossen ist;
- Fig. 2: eine detaillierte Darstellung einer weiteren erfindungsgemässen Vorrichtung;
- Fig. 3: eine erfindungsgemässe Vorrichtung zum mehrfach redundanten Anschliessen einer Last an drei Energiequellen;
- Fig. 4: eine schematische Darstellung einer Anschlussart einer erfindungsgemässen Vorrichtung an ein Stromversorgungsnetz;
- Fig. 5: eine schematische, perspektivische Darstellung einer erfindungsgemässen Vorrichtung, welche als eigenständiges Gehäuse ausgebildet ist;
- Fig. 6: eine Rückansicht der Vorrichtung aus Fig. 5;
- Fig. 7: eine schematische Darstellung einer erfindungsgemässen Vorrichtung, welche als Kabel ausgebildet ist;
- Fig. 8: eine schematische Darstellung eines weiteren Ausführungsbeispiels der Erfindung.

Grundsätzlich sind in den Figuren gleiche Teile mit gleichen Bezugszeichen versehen.

### Wege zur Ausführung der Erfindung

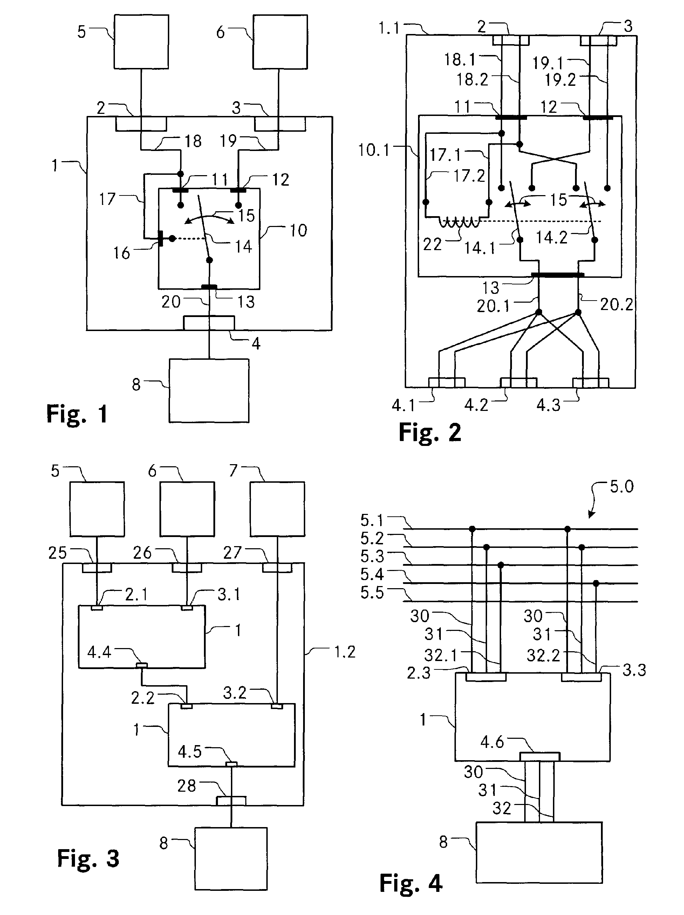

In Figur 1 ist schematisch eine erfindungsgemässe Vorrichtung 1 dargestellt. Sie weist zwei Eingänge 2, 3 und einen Ausgang 4 auf. Die Vorrichtung ist mit je einem Ihrer Eingänge 2, 3 an jeweils eine Energiequelle 5, 6 angeschlossen. An den Ausgang 4 der Vorrichtung 1 ist eine Last 8 angeschlossen, bei welcher es sich beispielsweise um einen Computer handelt. Die Vorrichtung 1 umfasst weiter ein Relais 10, beispielsweise ein elektromechanisches Relais, mit wiederum zwei Eingängen 11 und 12 sowie einem Ausgang 13. Je ein Eingang 2, 3 der Vorrichtung 1 ist intern via eine elektrische Verbindung 18, 19 mit einem der Eingänge 11, 12 des Relais 10 und der Ausgang 13 des Relais 10 ist intern via eine elektrische Verbindung 20 mit dem Ausgang 4 der Vorrichtung 1 verbunden. Das Relais 10 weist einen Steueranschluss, d.h. einen Steuereingang 16 und einen Umschalter 14 auf, wobei der Umschalter 14 in Abhängigkeit des am Steuereingang 16 anliegenden Signals einen der beiden Eingänge 11, 12 des Relais 10 mit dessen Ausgang 13 verbindet. Das Umschalten des Relais 10 ist durch den Doppelpfeil 15 angedeutet. Als Steuersignal, d.h. als Steuerspannung für das Relais 10 wird das Versorgungssignal an einem der beiden Eingänge des Relais verwendet. In dem dargestellten Beispiel ist der Steuereingang 16 des Relais 10 zur Steuerung des Relais 10 via eine Steuerleitung 17 direkt mit dem Eingang 11 des Relais 10 verbunden. Diese Art der Steuerung eines Relais wird auch als Selbst- oder Zwangssteuerung bezeichnet.

Es ist zu beachten, dass der Steueranschluss, d.h. der Steuereingang des Relais 10 in Bezug auf das Relais 10 nach aussen geführt und der Steuereingang 16 mittels der Steuerleitung 17 extern mit dem Eingang 11 des Relais 10 verbunden ist. Von Aussen betrachtet weist das Relais 10 also zwei Eingänge, einen Ausgang und einen Steueranschluss auf.

Liefert die Energiequelle 5 ein korrektes Versorgungssignal, liegt dieses sowohl am Eingang 2 der Vorrichtung 1 als auch am Eingang 11 und via Steuerleitung 17 auch am Steuereingang 16 des Relais 10 an. Das Relais 10 ist nun derart ausgebildet, dass es in diesem Fall anzieht und der Umschalter 14 den Eingang 11 mit dem Ausgang 13 elektrisch verbindet. D.h. die Last 8 wird von der Energiequelle 5 gespeist. Ob die Energiequelle 6 ebenfalls ein korrektes Versorgungssignal liefert oder nicht, ist hierbei nicht relevant.

Falls nun die Energiequelle 5 ausfällt und kein oder nur ein ungenügendes Versorgungssignal liefert, liegt am Steuereingang 16 des Relais 10 kein oder nur ein ungenügendes Steuersignal an. In diesem Fall fällt das Relais 10 ab und der Umschalter 14 verbindet den Eingang 12 mit dem Ausgang 13. Vorausgesetzt, die Energiequelle 6 fällt nicht gleichzeitig mit der Energiequelle 5 aus, wird die Last in diesem Fall von der Energiequelle 6 gespeist.

Mit der dargestellten Vorrichtung 1 ist es also möglich, eine Last 8 redundant mit elektrischer Energie zu versorgen, indem die Last mit einem als Umschalter konfigurierten Relais 10 an genau eine von zwei verschiedenen Energiequellen 5, 6 angeschaltet wird.

Das verwendete Relais 10 ist auf die Energiequellen 5, 6 sowie die angeschlossene Last 8 abgestimmt. Liefern die Energiequellen 5, 6 beispielsweise je eine 230 Volt Wechselspannung mit einer Frequenz von 50 Hz, wird das Relais beispielsweise derart gewählt, dass es eine Spannung von 250 Volt und je nach angeschlossener Last Ströme von bis zu 8 Ampere schadlos übersteht. Ist die Vorrichtung 1 zum Anschliessen eines Verbrauchers mit hohem Strombedarf oder zum Anschliessen mehrerer Verbraucher ausgebildet, kann ein Relais 10 für höhere Ströme, beispielsweise für Ströme bis zu 16 Ampere verwendet werden. Generell ist zu sagen, dass das Relais mit Vorteil derart gewählt wird, dass es die einschlägigen Standards und Vorschriften derjenigen Region erfüllt, in welcher es eingesetzt wird.

Beim Umschalten von einer ersten auf eine zweite Energiequelle ist in der Regel nicht gewährleistet, dass die beiden Versorgungssignale der beiden Energiequellen die gleiche Phasenlage haben. So können beispielsweise in Drehstromnetzen mit einer Spannung von 230 Volt zwischen dem Nullleiter und einer Phase beim Umschalten von einer auf eine andere Phase Spannungen bis rund 400 Volt auftreten. Das Relais ist mit Vorteil derart ausgelegt, dass es auch solche Spannungen übersteht. Bei Stromversorgungsnetzen mit anderen Nennspannungen sind die Anforderungen an das verwendete Relais hinsichtlich seiner Spannungsfestigkeit entsprechenden anzupassen.

In Figur 2 ist eine weitere erfindungsgemässe Vorrichtung 1.1 etwas detaillierter dargestellt. Die Vorrichtung 1.1 umfasst im Gegensatz zur Vorrichtung 1 aus Fig. 1 mehrere Ausgänge 4.1, 4.2, 4.3, welche parallel an den Ausgang 13 des Relais 10.1 angeschlossen sind. Damit können mehrere Lasten, beispielsweise ein Computer mit zugehörigem Bildschirm und Drucker redundant an zwei verschiedene Energiequellen angeschlossen werden.

Fig. 2 zeigt auch, dass eine Zuleitung an eine Energiequelle typischerweise mehr als einen Leiter, beispielsweise einen Nullleiter und einen Phasenleiter, umfasst. Dargestellt sind der Eingang 11 des Relais 10.1 mit einem Nullleiter 18.1 und einem Phasenleiter 18.2, der Eingang 12 des Relais 10.1 mit einem Nullleiter 19.1 und einem Phasenleiter 19.2 sowie der Ausgang 13 des Relais mit einem Nullleiter 20.1 und einem Phasenleiter 20.2. Entsprechend umfasst das Relais 10.1 auch zwei synchron geschaltete Umschalter 14.1, 14.2, welche jeweils einen der Nullleiter 18.1 oder 19.1 der Eingänge 11, 12 mit dem Nullleiter 10.1 des Ausgangs 13 bzw. einen der Phasenleiter 18.2 oder 19.2 der Eingänge 11, 12 mit dem Phasenleiter 20.2 des Ausgangs 13 verbinden.

Zur Steuerung der Umschalter 14.1, 14.2 umfasst das Relais 10.1 eine Magnetisierungswicklung 22, wobei der Nullleiter 18.1 via Steuernullleitung 17.1 mit einem Ende der Magnetisierungswicklung 22 und der Phasenleiter 18.2 via Steuerphasenleitung 17.2 mit dem anderen Ende Magnetisierungswicklung 22 verbunden ist. Liegt am Eingang 2 der Vorrichtung 1.1 und damit auch am Eingang 11 des Relais 10.1 ein korrektes Versorgungssignal an, fliesst in der Magnetisierungswicklung 22 ein Strom, welcher in der Magnetisierungswicklung 22 einen magnetischen Fluss erzeugt.

Ist der erzeugte magnetische Fluss gross genug, was bei einem korrekten Versorgungssignal der Fall ist, zieht das Relais 10.1 an und verbindet den Nullleiter 18.1 sowie den Phasenleiter 18.2 des Eingangs 11 mit dem Nullleiter 20.1 bzw. dem Phasenleiter 20.2 des Ausgangs 13.

Fliesst gar kein Strom durch die Magnetisierungswicklung 22 oder ist der erzeugte magnetische Fluss zu klein, zieht das Relais 10.1 nicht an und geht in die oder bleibt in der Ruhestellung, in welcher der Nullleiter 19.1 sowie der Phasenleiter 19.2 des Eingangs 12 mit dem Nullleiter 20.1 bzw. dem Phasenleiter 20.2 des Ausgangs 13 verbunden sind.

Im Gegensatz zu dem in Fig. 1 dargestellten Relais ist hier der Steueranschluss, d.h. die Enden der Magnetisierungswicklung 22, in Bezug auf das Relais 10.1 nicht nach aussen geführt. Dessen Eingang 11 ist mittels der Steuernullleitung 17.1 und der Steuerphasenleitung 17.2 quasi intern mit der Magnetisierungswicklung 22 verbunden. Das Relais 10.1 weist von aussen betrachtet also lediglich zwei Ein- und einen Ausgang, aber keinen Steuereingang auf.

Figur 3 zeigt ein weiteres Beispiel für eine erfindungsgemässe Vorrichtung 1.2. Diese weist drei Eingänge 25, 26, 27 auf, wobei an jeden Eingang 25, 26, 27 eine Energiequelle 5, 6, 7 angeschlossen ist. Die Vorrichtung 1.2 weist weiter einen Ausgang 28 auf, an welchen wiederum die Last 8 angeschlossen ist. Um nun die Last 8 an genau eine der Energiequellen 5, 6, 7 anzuschalten, sind zwei Vorrichtungen 1 gemäss Fig. 1 hintereinander geschaltet. D.h. die beiden Eingänge 25, 26 sind mit den beiden Eingängen 2.1, 3.1 der ersten Vorrichtung 1 und deren Ausgang 4.4 mit dem Eingang 2.2 der zweiten Vorrichtung 1 verbunden. Der Eingang 27 ist direkt auf den zweiten Eingang 3.2 der zweiten Vorrichtung 1 geführt. Der Ausgang 28 der Vorrichtung 1.2 wiederum ist mit dem Ausgang 4.5 der zweiten Vorrichtung 1 verbunden. Die Funktionsweise der Vorrichtungen 1 entspricht genau der Funktionsweise wie oben beschrieben. Mit dieser Anordnung kann die Last 8 dreifach redundant mit elektrischer Energie versorgt werden. D.h. von den drei Energiequellen 25, 26, 27, an welche die Vorrichtung 1.2 angeschlossen ist, können zwei ausfallen ohne dass die Last 8 davon etwas bemerkt.

Generell gesagt kann durch geeignetes Kaskadieren mehrerer Vorrichtungen 1 gemäss der Darstellung in Fig. 1 eine fast beliebig-fache Redundanz erreicht werden.

In Figur 4 ist schematisch dargestellt, wie die Vorrichtung 1 aus Fig. 1 an ein Stromversorgungsnetz 5.0 angeschlossen wird. Das Stromversorgungsnetz 5.0 ist in diesem Beispiel ein Drehstromnetz mit einem Erd- bzw. Schutzleiter 5.1, einem Nullleiter 5.2 und drei Phasenleiter 5.3, 5.4, 5.5, wobei die Spannungsverläufe der Phasenleiter 5.3, 5.4, 5.5 jeweils um 120 Grad versetzt sind.

Als unterschiedliche Energiequellen für die redundante Stromversorgung der Last 8 werden in diesem Beispiel nicht zwei unabhängige Stromversorgungen, sondern zwei verschiedene Abschnitte oder Segmente des Stromversorgungsnetzes 5.0 verwendet. Die beiden Eingänge 2.3, 3.3 der Vorrichtung 1 werden jeweils via eine dreiadrige Verbindung mit je einem Schutzleiter 30, einem Nullleiter 31 und einem Phasenleiter 32.1 bzw. 32.2 mit dem Stromversorgungsnetz 5.0 verbunden. Entsprechend ist auch die Last 8 via einen Schutzleiter 30, einen Nullleiter 31 und einen Phasenleiter 32 mit der Vorrichtung 1 verbunden. Das (nicht dargestellte) Relais der Vorrichtung 1 verbindet nun entweder den Phasenleiter 32.1 des Eingangs 2.3 oder den Phasenleiter 32.2 des Eingangs 3.3 mit dem Phasenleiter 32 des Ausgangs 4.6. Für den Fall, dass einer der beiden Phasenleiter 5.3 oder 5.4 des Stromversorgungsnetzes 5.0 ausfällt, beispielsweise weil eine Überstromsicherung der entsprechender Phase durchgebrannt ist, wird die Last 8 mit dem jeweils anderen Phasenleiter weiter betrieben.

Der Schutzleiter 30 wird typischerweise auf das Gehäuse der Vorrichtung 1 gelegt, welches zumindest teilweise aus einem elektrisch leitenden Material, wie beispielsweise Aluminium gefertigt ist. Die Nullleiter 31 der beiden Eingänge 2.3, 3.3 können, wie in Fig. 2 dargestellt, ebenfalls vom Relais geschaltet werden. Sie können aber auch direkt mit dem Nullleiter 31 des Ausgangs 4.6 verbunden werden. In einem entsprechenden, nicht dargestellten Ausführungsbeispiel der Erfindung könnten die beiden Eingänge der Vorrichtung zusammengefasst werden, wobei alle fünf Leiter des Stromversorgungsnetzes 5.0 mit einem handelsüblichen, fünfadrigen Kabel auf diesen Eingang geführt würden. Der Schutz- und der Nullleiter würden direkt auf den Ausgang der Vorrichtung geführt, wobei entsprechend dem in Fig. 3 gezeigten Prinzip jeweils nur genau einer der drei Phasenleiter auf den Phasenleiter des Ausgangs durchgeschaltet würde.

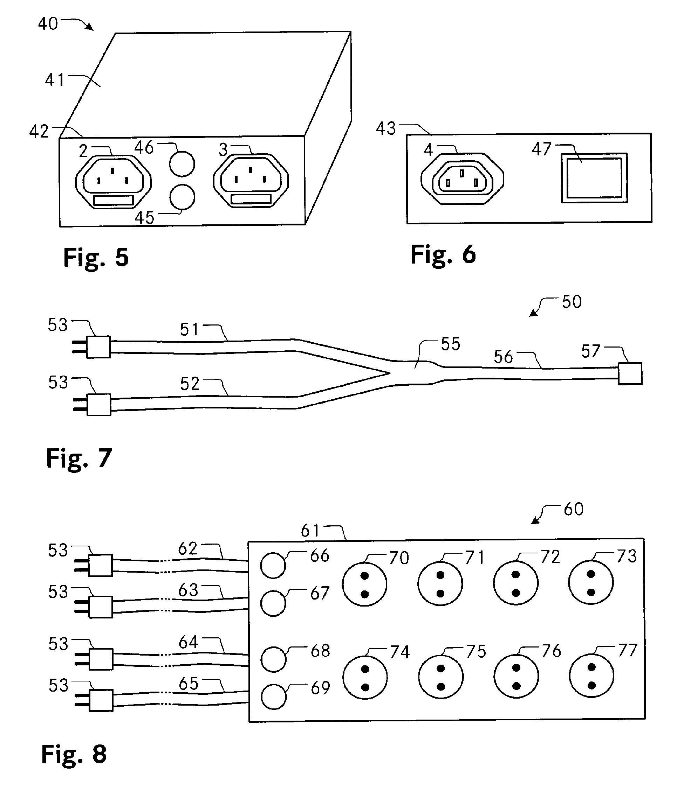

Die Figuren 5 und 6 zeigen eine schematische Darstellung einer als eigenständiges Gehäuse 41 ausgebildeten erfindungsgemässen Vorrichtung 40. Die Vorderseite 42 sowie die Rückseite 43 sind aus Aluminium und die restlichen Seitenwände aus Kunststoff gefertigt. Die Vorderseite 42 umfasst die als Gerätestecker mit Kontaktstiften ausgebildeten Eingänge 2 und 3 sowie zwei optische Anzeigen 45, 46, welche beispielsweise als Leuchtdioden ausgebildet sind. Die Anzeige 45 leuchtet, wenn am Eingang 2 eine korrekte Netzspannung anliegt. Entsprechend leuchtet die Anzeige 46, wenn am Eingang 3 eine korrekte Netzspannung anliegt.

Der Ausgang 4 sowie ein Ein-/Ausschalter 47 sind in die Rückseite 43 der Vorrichtung 40 integriert. Der Ausgang ist als Gerätesteckdose mit Kontaktbuchsen ausgebildet, wobei der Ein-/Ausschalter 47 dazu dient, den Phasenleiter und/oder den Nullleiter des Ausgangs 4 zu unterbrechen, um die Vorrichtung 40 manuell ein- bzw. auszuschalten.

Ein weiteres Ausführungsbeispiel einer erfindungsgemässen Vorrichtung 50 ist in Figur 7 dargestellt. In diesem Beispiel ist die Vorrichtung 50 nicht als festes Gehäuse, sondern als flexibles, Y-förmiges Kabel ausgebildet. Die beiden Eingänge der Vorrichtung 40 sind als Kabel 51, 52 mit jeweils einem Stecker 53 ausgebildet. Im Kreuzungspunkt 55 befindet sich das (nicht dargestellte) Relais und der Ausgang der Vorrichtung 40 ist als Kabel 56 mit einer Steckdose 57 ausgebildet.

In Figur 8 ist ein weiteres Ausführungsbeispiel der Erfindung dargestellt. Diese Anschlussanordnung 60 umfasst ein Gehäuse 61 mit vier Eingängen, wobei jeder Eingang mit einem Kabel 62, 62, 64, 65 mit jeweils einem Stecker 53 verbunden ist. Vier Anzeigen 66, 67, 68, 69 zeigen an, an welchem der Eingänge eine korrekte Versorgungsspannung anliegt. Weiter umfasst die Anschlussanordnung 60 zwei (nicht dargestellte) Relais sowie ein erstes Set von parallel geschalteten Steckdosen 70, 71, 72, 73 und ein zweites Set von parallel geschalteten Steckdosen 74, 75, 76, 77. Das erste Set von Steckdosen 70, 71, 72, 73 wird mittels einem der beiden Relais redundant an die beiden Kabel 62 und 63 angeschlossen und das zweite Set von Steckdosen 74, 75, 76, 77 wird mittels dem anderen Relais redundant an die beiden Kabel 64 und 65 angeschlossen. D.h. die Anschlussanordnung 60 umfasst quasi zwei voneinander unabhängige Vorrichtungen gemäss Fig. 1.

Selbstverständlich kann eine erfindungsgemässe Anschlussanordnung auch mehr als zwei voneinander unabhängige Vorrichtungen gemäss Fig. 1 aufweisen.

Die Gehäuse der erfindungsgemässen Vorrichtungen können auf verschiedene Arten ausgebildet sein. Sie können beispielsweise derart ausgebildet sein, dass sie sich zum Aufstellen auf dem Boden oder auf einem Tisch eignen. Sie können aber auch derart ausgebildet sein, dass sie in einem Gestell oder Schrank befestigt werden können. Sie können beispielsweise mit Löchern versehen werden, damit sie in einem genormten 19 Zoll Rack festgeschraubt werden können.

Eine weitere Bauform der erfindungsgemässen Vorrichtung ist die Ausführung als kompaktes Schaltmodul, beispielsweise zum Aufstecken auf eine DIN-Schiene in einem Schaltschrank wie etwa in einem Sicherungkasten, wobei die Anschlüsse z. B. als Schraubklemmen ausgeführt sind.

Selbstverständlich kann eine erfindungsgemässe Vorrichtung auch zum Umschalten von mehrphasigen Energiequellen verwendet werden. Eine derartige Vorrichtung kann beispielsweise zum Anschliessen von Elektromotoren mit Drehstrom an zwei dreiphasige Energiequellen verwendet werden. In diesem Fall werden vom Relais vorzugsweise alle Phasen sowie der Nullleiter zweier verschiedener Energiequellen umgeschaltet.

Generell ist festzuhalten, dass die konkreten Werte der verwendeten Bauteile entsprechend der gewünschten Anwendung gewählt werden. D.h. je nach der anzuschliessenden Last ist es unter Umständen von Vorteil oder notwendig, andere Relais oder andere Schutzbeschaltungen vorzusehen. Hinsichtlich der elektrischen, mechanischen oder anderweitigen Anforderungen an die erfindungsgemässe Vorrichtung kann es nämlich durchaus einen Unterschied ausmachen, ob ein Computer, eine einfache Glühbirne, ein Heizlüfter oder gar ein Asynchronmotor daran angeschlossen werden sollen.

Zusammenfassend ist festzustellen, dass es die Erfindung erlaubt, auf einfache und kostengünstige Art und Weise eine Vorrichtung zu schaffen, um ein elektrisch betriebenes Gerät, oder allgemeiner ausgedrückt einen elektrischen Verbraucher, redundant mit elektrischer Energie zu versorgen, insbesondere redundant an zwei elektrische Energiequellen anzuschliessen.

## Patentansprüche

1. Vorrichtung mit einem Geräteanschluss zum Anschliessen einer elektrischen Last sowie mit zwei Netzanschlüssen zum Anschliessen an zumindest eine Energieversorgung, **dadurch gekennzeichnet, dass** die Vorrichtung ein Relais mit zwei Eingängen und einem Ausgang umfasst, wobei die beiden Eingänge des Relais mit den beiden Netzanschlüssen und der Ausgang des Relais mit dem Geräteanschluss elektrisch verbunden sind und das Relais zur Steuerung einer Durchschaltung eines seiner Eingänge auf den Ausgang einen Steueranschluss umfasst, welcher direkt mit einem der Eingänge des Relais verbunden ist.

2. Vorrichtung nach Anspruch 1, **dadurch gekennzeichnet, dass** das Relais als Umschalter ausgebildet ist, wobei ein erster Eingang des Relais direkt mit dem Steueranschluss verbunden und das Relais in seiner Ruhestellung einen zweiten Eingang des Relais auf dessen Ausgang durchschaltet.

3. Vorrichtung nach Anspruch 1 oder 2, **dadurch gekennzeichnet, dass** die zumindest eine Energieversorgung ein Niederspannungsstromversorgungsnetz umfasst.

4. Vorrichtung nach einem der Ansprüche 1 bis 3, **dadurch gekennzeichnet, dass** sie mehrere Geräteanschlüsse umfasst, wobei der Ausgang des Relais mit jedem Geräteanschluss elektrisch verbunden ist.

5. Vorrichtung nach einem der Ansprüche 1 bis 4, **dadurch gekennzeichnet, dass** sie zumindest drei Netzanschlüsse und zumindest zwei Relais umfasst, wobei jeder Netzanschluss mit einem Eingang eines Relais, der Ausgang genau eines Relais mit dem Geräteanschluss und der Ausgang der anderen Relais mit einem Eingang eines anderen Relais verbunden ist.

6. Vorrichtung nach einem der Ansprüche 1 bis 5, **dadurch gekennzeichnet, dass** der Geräteanschluss weibliche Verbindungskontakte und die Netzanschlüsse männliche Verbindungskontakte aufweisen.

7. Vorrichtung nach einem der Ansprüche 1 bis 6, **dadurch gekennzeichnet, dass** sie als Kabel ausgebildet und das Relais in das Kabel integriert ist.

8. Vorrichtung nach einem der Ansprüche 1 bis 7, **dadurch gekennzeichnet, dass** sie als eigenständiges Gehäuse ausgebildet ist, wobei der Geräteanschluss als Gerätesteckdose und die Netzanschlüsse als Gerätestecker ausgebildet sind.

9. Vorrichtung nach einem der Ansprüche 1 bis 8, **dadurch gekennzeichnet, dass** das Relais eine Schaltverzögerung aufweist, welche unter einigen Dutzend Millisekunden, insbesondere unter 15 Millisekunden liegt.

10. Vorrichtung nach einem der Ansprüche 1 bis 9, **dadurch gekennzeichnet, dass** sie zumindest eines der folgenden Merkmale aufweist:
a) ein Netzfilter zur Filterung eines Eingangssignals an den Netzanschlüssen;
b) einen Überspannungsschutz zum Schutz gegen Überspannungen an den Netzanschlüssen, wobei der Überspannungsschutz insbesondere einen Varistor umfasst oder
c) zumindest eine Anzeige zum Anzeigen eines Betriebszustandes der Vorrichtung.

11. Anschlussanordnung, **dadurch gekennzeichnet, dass** sie zumindest zwei Vorrichtungen nach einem der Ansprüche 1 bis 10 umfasst.
